# EUROPEAN PATENT SPECIFICATION

(11) **EP 3 986 735 B1**
(45) Date of publication and mention of the grant of the patent: **25.06.2025**
(21) Application number: 20747336.4
(22) Date of filing: 18.06.2020
(51) Int. Cl.: B60K 1/04, B60L 53/16, B60K 15/05, B60K 15/04

(54) **VEHICLE CHARGING MODULE**
FAHRZEUGLADEMODUL
MODULE DE CHARGE DE VÉHICULE

(30) Priority: 20.06.2019 CZ 20190398
(43) Date of publication of application: 27.04.2022
(73) Proprietor: Brano A.S., 747 41 Hradec nad Moravicí (CZ); Skoda Auto A.S., 293 01 Mladá Boleslav II (CZ)
(72) Inventor: SMUTEK, Petr, 747 55 Opava (CZ)
(74) Representative: Fischer, Michael
(86) International application number: PCT/CZ2020/000029
(87) International publication number: WO 2020/253893

(56) References cited:
- EP-A1- 3 231 972
- CN-A- 106 427 545
- DE-A1- 102015 214 781
- DE-A1- 102017 222 397
- DE-U1- 202016 105 735
- US-A1- 2015 375 630
- US-A1- 2016 121 746

## Description

### Field of the Invention

The invention relates to a vehicle charging module, in particular an electric drive vehicle, comprising an electric charging socket housed in a bottom of a dish-shaped bulge of the vehicle body and opened with its front, provided with at least one connection hole, in the direction of the longitudinal axis thereof to the orifice of the dish-shaped bulge, and a lid swing mounted in the body to close the dish-shaped bulge orifice using two arms, the carrying ends of which are pivotally mounted on the lid inside by means of carrying pins and support ends of which are pivotally mounted in the body by means of support pins arranged on one side of the charging socket.

### Background

Electric drive vehicles draw energy from batteries, which must be charged from an external source. For charging, a charging module is arranged in the body, usually on the vehicle side, having an electrical socket arranged in the bottom of the dish-shaped bulge of the body, covered by a lid. The lid of the charging module for electric drive vehicles is usually arranged and made identically to the lid of the filling module for combustion drive vehicles. Lids of charging and filling modules, as known so far, are firmly connected to one shaped arm, mounted pivotally in the vehicle body with the free end thereof. The pivotal mounting of the free end of the shaped arm is located deeper in the body and it is necessary to create a large free space in the body for it to be able to move. Creating such free space is difficult to manufacture and expensive, and the free space itself is undesirable. The lids of the charging and filling modules, as known so far, only close the charging module at the point of the body dish-shaped bulge orifice. A separate cap must be provided to close the filler neck or the charging socket opening. According to the prior art, the lids must be large enough to cover the filling or charging opening and, at the same time, engage with the locking member and the contact sensor, which are, therefore, arranged on the opposite side of the body dish-shaped bulge than the lid hinge is arranged. When opened, the lid extends far out of the body, forming an obstacle for the vehicle operation at a gas station. The lid, extending far out of the body, may become damaged by twisting.

EP3345781 discloses a vehicle filling module lid, which is mounted swivelly in a filling module housing movable between a closed position where the lid covers the filling module opening flush with the body and an open position where the lid is tilted perpendicular to the body and opens the filling module opening. When opening, tilting of the lid is enabled by placing the lid on two interlocking support arms rotating in the phase of tilting the lid in opposite directions so that the lid does not hit the outer panel. The filling module must contain a large internal space for accommodating and moving the support arms, however, such space is not desirable. The lid is not very stable in the tilted position and creates an obstacle for the operator's movement.

US 2015/375630 A1 discloses a door assembly for a charging port for an electric vehicle including a link assembly mounted to a back of a charging port door to perform a swing operation. The door assembly includes a first link, a second link and a third link. The outer end of the first link is mounted to one end portion of an inner surface of the charging port door to be swingable through a first hinge pin, and an inner end of which is hinged to the vehicle body. The outer end of the second link is mounted to an intermediate portion of the inner surface of the charging port door to be swingable through a second hinge pin, and an inner end of which is hinged to the vehicle body. The outer end of the third link is hinged to the second link, and an inner end of which is engaged within a rail mounted on another end portion of the inner surface of the charging port door. The inner ends of the first and of the second link are hinged to the vehicle body by means of suspension pins arranged in the body of the vehicle next to each other in parallel with the lid and in parallel with the front of the charging socket. The first and second links are arranged in such a way that they intersect when the lid is closing or opening. When opening the lid, the first link passes through the cutout of the second link, therefore the second link must have a cutout of substantial dimensions. When the lid closed the first and second links take up too much space and extend too far in the direction perpendicular to the lid.

DE10 2015 214 781 A1 discloses a flat lid of a vehicle charging module, which is hinged in a housing of the charging module to cover the opening of the charging module. In the closed position, the lid covers the opening of the charging module flush with the body. Flipping the lid when opening is made possible by placing the lid on two supporting arms placed with one inner end rotatably on the inner wall of the charging module and the other outer ends rotatably on the inner side of the lid. The rotatable bearing of the outer ends of the support arms on the inner side of the lid is arranged on one part of the inner surface of the lid so that the remaining second part of the inner surface of the lid covers the opening of the charging module in the closed position of the lid. The charging module must contain a large internal space next to the opening of the charging module for storage and movement of the support arms, therefore the housing of the charging module is significantly longer than the charging module itself. After covering the opening of the charging module, the cap is not pressed against the opening of the charging opening and the covering is therefore leaky.

### Summary of the Invention

The object of the invention is to eliminate the disadvantages of the prior art and to provide a vehicle charging module, which is less space-consuming, has a more reliable and stronger suspension and is suitable for charging with one as well as both AC/DC electric currents.

The disadvantages of the prior art are substantially eliminated and the object of the invention is achieved by a vehicle charging module comprising an electric charging socket housed in a bottom of a dish-shaped bulge of a vehicle body and with its front, provided with at least one connection hole, opened in the direction of the longitudinal axis thereof to the orifice of the dish-shaped bulge, and a lid swing mounted in the vehicle body to close the dish-shaped bulge orifice using two arms, carrying ends of which are pivotally mounted on the lid inside by means of carrying pins and support ends of which are pivotally mounted in the body by means of support pins arranged on one side of the charging socket, whereas, the arms and the lid form a parallelogram to move the lid in a position parallel to the vehicle body surface, wherein the support pin of the arm, which is closer to the charging socket is in the direction of the longitudinal axis of the charging socket, is closer to the front of the charging socket than the support pin of the arm, which is more distant from the charging socket, according to the invention consisting in that a cap for the connection hole of the charging socket is arranged on the side of one of the arms facing the charging socket.

Preferably, the cap can be pivotally mounted on the support pin of the arm which is closer to the charging socket for movement between the arm and the connection hole of the charging socket.

The charging module according to the invention has the advantage in that
- It requires less installation space within the body, especially in the direction from the body surface to the depth, as no empty space is required for the movement of the hanging arm of the lid;
- In the open state, the lid occupies less space in a direction perpendicular to the body surface, because the lid is hinged by means of a parallelogram and, in the open position, the lid is in a position substantially parallel to the body surface;
- The lid movement, which is attached to the hinge part through the clips, is provided;
- The two swivel arms of the parallelogram, on which the lid is hinged, hold the lid against each other on two sides so that the lid is hinged firmly;
- It allows easy connection of the electric lid drive; and
- The cap may optionally cover one or all of the connection holes of the charging socket and, therefore, the charging module may comprise a double, so-called "combo" charging socket combining connection holes for both AC and DC charging. Cap of the connection hole. After opening the lid, the connection hole for AC charging can be uncovered. When using the" combo" charging socket (AC + DC), it is necessary to manually uncover the DC connection hole. The advantage is that the operator is protected against electric shock, especially when using only the AC charging.

### Explanation of Drawings

The vehicle charging module of the invention is illustrated in the drawings, where
Fig. 1 shows a charging module with an open lid in a horizontal section; and
Fig. 2 shows a charging module with a closed lid in a horizontal section.

### Example embodiment of the invention

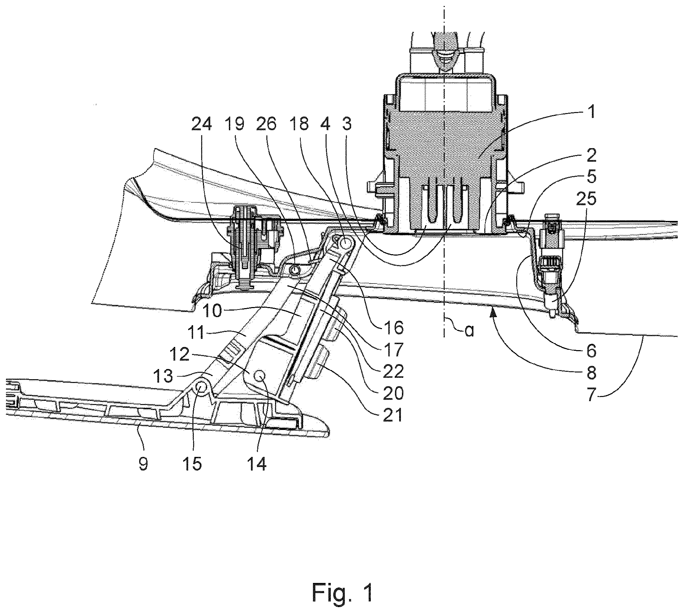

According to Fig. 1, a dish-shaped bulge 6 is formed in the body 7, in the bottom 5 of which an electric charging socket 1 is accommodated, which with its front 2 with connection holes 3, 4 faces in the direction of the longitudinal axis α thereof to the orifice 8 of the dish-shaped bulge 6. The lid 9 is swing mounted in the body 7 to close the dish-shaped fillings 6. On its inner side, the lid 9 is provided with housings to accommodate carrying pins 14, 15, on which the lid 9 is hinged. The carrying pins 14, 15 are accommodated in the free carrying ends 12, 13 of the arms 10, 11, which form a parallelogram with the lid 9. Preferably, the carrying pins 14, 15 are mounted in housings of the lid 9 firmly and in the free carrying ends 12, 13 of the arms 10, 11 pivotally; the pivotal mounting can also be performed reversely: firm mounting of the carrying pins 14, 15 in free carrying ends 12, 13 of the arms 10, 11 and pivotal mounting in the housings of the lid 9. Preferably, the arms 10, 11 can be connected to a carrying element, on which the lid 9 itself only snaps into place, by means of carrying pins 14, 15. Similarly to the carrying pins 14, 15 being mounted in the free carrying ends 12, 13 of the arms 10, 11, the second free support ends 16, 17 of the arms 10, 11 are pivotally mounted on the support pins 18, 19 mounted in the body 7. Alternatively, the pivotal mounting can be performed in such a way that the support pins 18, 19 are mounted firmly in the housings of the free support ends 16, 17 and pivotally in the body 7. The arms 10, 11 form opposite arms of the parallelogram and their support pins 18, 19 are arranged on one side of the dish-shaped bulge 6 of the body, so that, in the open position of the lid 9 according to Fig. 1, the arm 10, pivotally mounted on the support pin 18, is closer to the dish-shaped bulge 6 and the charging socket 1 than the second arm 11. Around the support pin 18, double-return spring 26 is arranged, which, according to Fig. 1, presses the arm 10 into the open position and, when rotated in the direction of the lid 9 closing, the double-return spring 26 begins to act the arm 10 in the direction of the lid 9 closing. The support pins 18, 19 are arranged on one side of the charging socket 1 and the support pin 18 of the arm 10 closer to the charging socket 1 is preferably closer to the front 2 of the charging socket 1 than the support pin 19 of the arm 11 farther from the charging socket 1 in the longitudinal axis (α) of the charging socket 1. On the side of the arm 10 that is facing the dish-shaped bulge 6 of the charging socket 1, caps 20, 21 are arranged for to cover the connection holes 3, 4 of the charging socket 1. When the lid 9 is closed, the caps 20, 21 fit on the connection holes 3, 4 of the charging socket 1. Such an arrangement of the support pins 18, 19 allows the arm 10 to easily fit the bottom 5 of the dish-shaped bulge 6 of the charging socket 1. One or both caps 20, 21 may be preferably arranged on a separate arm 22, which is pivotally mounted on the support pin 18 of the arm 10 closer to the charging socket 1 so that the arm 10 can move independently of the arm 22 and the caps 20, 21 on the arm 22 can cover one or both connection holes 3, 4 independently of the position of the arm 10. Preferably, the arm 22 may be lockably connect to the arm 10. Alternatively, the cap 20, 21 may be fixedly mounted on one of the arms 10, 11. In this case, the caps 20, 21 cover the connection holes 3, 4 whenever the lid 9 is closed and uncover whenever the lid 9 is opened.

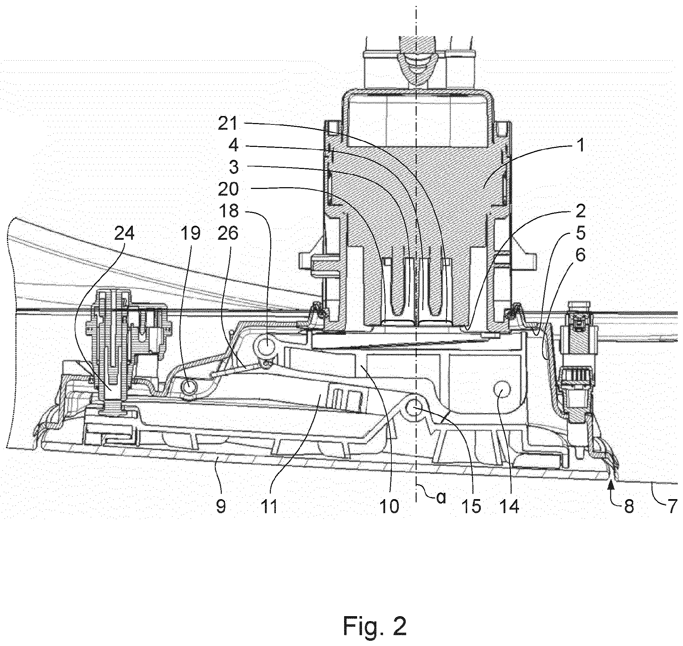

According to Fig. 2, the vehicle charging module is in the closed state, when the lid 9 is in a position aligned with the outside of the body 7. The arms 10, 11 are turned into the space of the dish-shaped bulge 6 contrary to the open state of the charging module. The support pin 18 arranged closer to the front 2 of the charging socket 1 allows the arm 10 to fit the bottom 5 of the dish-shaped bulge 6 and the caps 20, 21 to fit fully the connection holes 3, 4 of the charging socket 1 substantially in the direction of the longitudinal axis α. In the state of closed charging module, the inner side of the lid 9 fits the locking element 24, which is in contact with the respective catching element on the inner side of the lid 9. On the opposite side of the dish-shaped bulge 6, oppositely to the locking element 24, a switching element of the sensor 25 is arranged to detect and signal the closed position of the lid 9.

The method for operation of the vehicle charging module according to the invention comprises the following steps:
- Automatic unlocking of the locking element 24 by a control unit when unlocking the vehicle;
- Pushing by means of hands on the lid 9 in a place against the locking element 24 causes the lid 9 is unlocked and released from the connection with the locking element 24;
- Pulling by means of hands causes the lid 9 is opened and moved in a direction parallel to the surface of the body 7, wherein the lid 9 moves as determined by the parallelogram arms;
- When opening the lid 9, the force of the double-return spring 26 is overcome;
- In the open position, the force of the double-return spring 26 acts on the lid 9 to avoid self-closing of the lid 9;
- With free access to the dish-shaped bulge 6, the charging plug is inserted;
- In the case the "combo" charging socket 1 is to be used for both AC and DC charging at the same time, the operator manually releases the cap 21 and tilts it off from the connection holes 3, 4 by turning around the axis of the support pin 18, preferably also provided with the double-return spring 23;
- After charging is completed and the charging plug is disconnected, the operator closes the lid 9 by pushing by means of hands in the opposite direction than when opening the lid 9;
- Preferably, an electric drive of the arm 10, 11 can be used to control the closing and opening of the lid 9, which is advantageous in particular for automated charging.

### List of Reference Numerals

- 1: Charging socket
- 2: Front (of the charging socket)
- 3: Connection hole (of the charging socket)
- 4: Connection hole (of the charging socket)
- 5: Bottom
- 6: Dish-shaped bulge
- 7: Body
- 8: Orifice (of the dish-shaped bulge)
- 9: Lid
- 10: Arm
- 11: Arm
- 12: Carrying end
- 13: Carrying end
- 14: Carrying pin
- 15: Carrying pin
- 16: Support end
- 17: Support end
- 18: Support pin
- 19: Support pin
- 20: Cap (of the connection hole)
- 21: Cap
- 22: Arm
- 23: Double-return spring (of the cap arm)
- 24: Locking element
- 25: Sensor switching element
- 26: Double-return spring (of the lid)
- α: Longitudinal axis (of the charging socket)

## Claims

1. A vehicle charging module, in particular of an electric
drive vehicle, comprising an electric charging socket (1) housed in a bottom (5) of a dish-shaped bulge (6) of a vehicle body (7) and with its front (2) provided with at least one connection hole (3, 4), opened in the direction of the longitudinal axis (α) thereof to the orifice (8) of the dish-shaped bulge (6), and
a lid (9) swing mounted in the vehicle body (7) to close the dish-shaped bulge (6) orifice (8) by means of two arms (10, 11), carrying ends (12, 13) of which are pivotally mounted on the lid (9) inside by means of carrying pins (14, 15) and support ends (16, 17) of which are pivotally mounted in the vehicle body (7) by means of support pins (18, 19) arranged on one side of the charging socket (1), whereas the arms (10, 11) and the lid (9) form a parallelogram to move the lid (9) in a position parallel to the vehicle body (7) surface,
wherein the support pin (18) of the arm (10), which is closer to the charging socket (1) is in the direction of the longitudinal axis (α) of the charging socket (1), is closer to the front (2) of the charging socket (1) than the support pin (19) of the arm (11), which is more distant from the charging socket (1), **characterized in that**
a cap (20, 21) of the connection hole (3, 4) of the charging socket (1) is arranged on the side of one of the arms (10, 11), facing the charging socket (1).

2. A vehicle charging module according to the claim 1, **characterized in that**
the cap (20, 21) is pivotally mounted on the support pin (18) of the arm (10) which is closer to the charging socket (1) for movement between the arm (10) and the connection hole (3, 4) of the charging socket (1).

## Patentansprüche

1. Lademodul eines Kraftfahrzeugs, insbesondere eines Kraftfahrzeugs mit Elektroantrieb, umfassend eine elektrische Ladebuchse (1) gelagert im Boden (5) einer schalenförmigen Ausbuchtung (6) der Karosserie (7) des Kraftfahrzeugs und mit ihrer Stirnseite (2), versehen mit wenigstens einer Anschlussöffnung (3, 4), offen in Richtung ihrer Längsachse (α) zur Mündung (8) der schalenförmigen Ausbuchtung (6) und eine Kappe (9) gelagert in der Karosserie (7) des Kraftfahrzeugs schwenkbar zum Schließen der Mündung (8) der schalenförmigen Ausbuchtung (6) mit Hilfe von zwei Schenkeln (10, 11), deren tragende Enden (12, 13) mit Hilfe von Tragzapfen (14, 15) drehbar auf der inneren Seite der Kappe (9) gelagert sind und deren Lagerenden (16, 17) mit Hilfe von auf der einen Seite der Ladebuchse (1) angeordneten Lagerzapfen (18, 19) drehbar in der Karosserie (7) gelagert sind,
wobei die Schenkel (10, 11) ein Parallelogramm mit der Kappe (9) bilden, um die Kappe (9) in einer Position parallel zur Oberfläche der Fahrzeugkarosserie (7) zu bewegen,
wobei der Lagerzapfen (18) des Schenkels (10), der näher an der Ladebuchse (1) liegt, näher an der Stirnseite (2) der Ladebuchse (1) in Richtung der Längsachse (α) der Ladebuchse (1) liegt als der Lagerzapfen (19) des Schenkels (11), der weiter von der Ladebuchse (1) entfernt ist,
**dadurch gekennzeichnet, dass** auf der Seite eines der Schenkel (10, 11), die der Ladebuchse (1) zugewandt ist, ein Deckel (20, 21) der Anschlussöffnung (3, 4) der Ladebuchse (1) angeordnet ist.

2. Lademodul eines Kraftfahrzeugs nach Anspruch **1,**
**dadurch gekennzeichnet, dass**
der Deckel (20, 21) schwenkbar auf dem Lagerzapfen (18) des Schenkels (10) gelagert ist, der näher an der Ladebuchse (1) angebracht ist, um sich zwischen dem Schenkel (10) und der Anschlussöffnung (3, 4) der Ladebuchse (1) bewegen zu können.

## Revendications

1. Module de charge pour automobile, en particulier une automobile à propulsion électrique, comprenant une prise de charge (1) électrique située dans le fond (5) d'une convexité (6) en forme de cuvette de la carrosserie (7) de l'automobile et dont la face avant (2) est pourvue d'au moins une ouverture de raccordement (3, 4), ouverte dans la direction de son axe longitudinal (α) vers l'embouchure (8) de la convexité (6) en forme de cuvette et un capuchon (9) monté dans la carrosserie (7) de l'automobile de manière pivotante pour fermer l'embouchure (8) de la convexité (6) en forme de cuvette à l'aide de deux bras (10, 11) dont les extrémités portantes (12, 13) sont disposées de manière pivotante à l'intérieur du capuchon (9) au moyen de goupilles portantes (14, 15) et dont les extrémités de montage (16, 17) sont disposées de manière pivotante dans la carrosserie (7) au moyen de goupilles de montage (18, 19) disposées sur un côté de la prise de charge (1),
les bras (10, 11) formant un parallélogramme avec le capuchon (9) pour déplacer le capuchon (9) dans une position parallèle à la surface de la carrosserie (7) de l'automobile,
la goupille de montage (18) du bras (10) plus proche de la prise de charge (1) est plus proche de la face avant (2) de la prise de charge (1) dans la direction de l'axe longitudinal (α) de la prise de charge (1) que la goupille de montage (19) du bras (11) plus éloigné de la prise de charge (1)
**caractérisé en ce que**
sur le côté de l'un des bras (10, 11), qui est tourné vers la prise de charge (1), un couvercle (20, 21) de l'ouverture de raccordement (3, 4) de la prise de charge (1) est disposé.

2. Module de charge pour automobile selon la revendication 1, **caractérisé en ce que**
le couvercle (20, 21) est disposé de manière pivotante sur la goupille de montage (18) du bras (10) plus proche de la prise de charge (1) pour le déplacement entre le bras (10) et l'ouverture de raccordement (3, 4) de la prise de charge (1).
